# EUROPEAN PATENT SPECIFICATION

(11) **EP 0 768 202 B1**
(45) Date of publication and mention of the grant of the patent: **13.10.1999**
(21) Application number: 96830409.7
(22) Date of filing: 23.07.1996
(51) Int. Cl.: B60J 11/00

(54) **Protective covering for vehicles, in particular against hail**
Abdeckhülle für Fahrzeug, insbesondere für den Schutz gegen Hagel
Housse pour véhicule, en particulier pour protection contre les chutes de grêle

(30) Priority: 10.10.1995 IT MI952059
(43) Date of publication of application: 16.04.1997
(73) Proprietor: Grecchi, Franco Roberto, 28041 Arona (Novara) (IT)
(72) Inventor: Grecchi, Franco Roberto, 28041 Arona (Novara) (IT)
(74) Representative: Righetti, Giuseppe

(56) References cited:
- WO-A-92/15467
- DE-U- 9 400 266
- US-A- 5 242 206

## Description

The present invention relates to a protective covering for vehicles, in particular against hail.

It is known that an emergency protection of vehicle bodies, and in particular car bodies, against hail is presently carried out by the use of differently shaped covers generally consisting of special tarpaulins that are unfolded over the upper surfaces of said vehicles, in case of need. Such an emergency protection is shown in WO-A-92/15 467.

According to a first known technique, these tarpaulins, when not in use, are stored in a rolled condition on appropriate coilers and unrolled over the vehicles like canopies, suitably maintained spaced apart from the body surfaces by spacer means.

Another known technique uses covers provided with tightly sealed hollow spaces or bags that, arranged so as to adhere to the car bodies, are inflated using the compressed air of the car tyres, so as to create pneumatic paddings capable of absorbing the impact energy of the hailstones as much as possible.

Still another known technique utilizes small mattresses of soft material that are unfolded and fastened to the vehicles by appropriate engagement means.

Although the known covers briefly described above and still others, in some cases obtain a sufficient protection against the dangers of damages resulting from showering down of hailstones, they however have many limits and drawbacks that most of times make practically inefficient the use of same.

In fact, one of the essential features that an emergency anti-hail covering should have, is obviously, the rapidity with which passage of said covering from a non-operating condition to a use condition is made possible, in order both to avoid the occurrence of damages to a vehicle body, and not to oblige a user to remain outdoors for a long time under uncomfortable conditions. None of the protective covers mentioned above is practically capable of achieving the above set forth target to an appropriate extent, because for bringing said covers to a use condition one or more operating steps the duration of which is not very short are always necessary, i.e. unfolding of the covers themselves, subsequent fastening to the car body and other possible operations, such as inflating of the pneumatic hollow spaces for example.

In addition, another important feature that an anti-hail covering for vehicles should possess is easiness in the operations for unfolding it over the car body. It must also be practical and its positioning must not need any particular efforts, even in the presence of a strong wind generally associated with hail precipitations. This feature too cannot be found in covers of known type, because for use of same at least two distinct steps in succession need to be carried out: a first step for unfolding the covers and a second step involving fastening of same to the vehicles. During the first step wide cover surfaces can be impinged on by the wind and raised before an appropriate locking of them to the vehicles has been possible. Therefore application of one of said protective covers as provided in the known art may be very hard or even impossible, above all if the operation is to be carried out by a single person.

Finally, some known anti-hail emergency covers do not always enable a safe protection under all circumstances because for example in case of use of tarpaulins spaced apart from the body surfaces, if said covers are submitted to strong stresses, yieldings can take place that will eliminate the intended air spaces between the tarpaulins themselves and the surfaces to be protected.

Under this situation, the technical task underlying the present invention is to devise a protective covering for vehicles capable of substantially eliminating the mentioned drawbacks.

Within the scope of this technical task, it is an important aim of the invention to devise a protective covering of sure efficiency and quick, easy and practical use under any circumstances, even by one user alone.

The technical task mentioned and the aim specified are substantially achieved by a protective covering for vehicles which is characterized in that it comprises:
- at least one series of protective sectors adapted to absorb the impact energy of the hailstones at least partly;
- flexible connection means for said sectors which is adapted, in an operating condition, to enable unfolding of said sectors at least over one portion of the upper surface of a vehicle and, in a non-operating condition, to enable folding up of the covering itself in such a manner as to cause mutual superposition of said sectors; and
- means for fastening the covering to the vehicle body.

The description of a preferred and non-exclusive embodiment of a protective covering in accordance with the invention is now taken hereinafter, by way of non-limiting example, with reference to the accompanying drawings, in which:

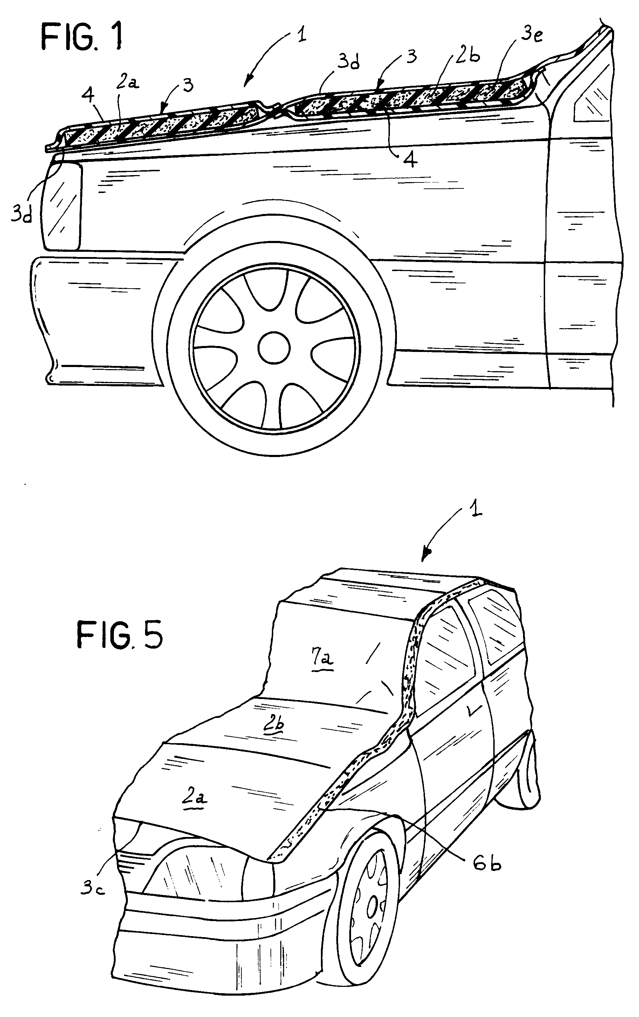

- Fig. 1 shows a covering in accordance with the invention in a longitudinal section, applied to the front portion of a car;
- Fig. 2 is a top view of the covering shown in Fig. 1 before it is longitudinally unfolded;
- Fig. 3 is a top view of the covering shown in Fig. 1 partly unfolded; and
- Fig. 4 is a sectional view taken along the plane IV-IV in Fig. 3;
- Fig. 5 is a fragmentary perspective view showing one of the covering sides;
- Fig. 6 is a longitudinal sectional view of the covering applied to the whole car;
- Fig. 7 is a side view showing an alternative embodiment of the covering in question applied to the whole car;
- fig. 8 is a view taken along line VIII-VIII in Fig. 7.

With reference to the drawings, the protection covering in accordance with the invention is generally identified by reference numeral 1.

It comprises a plurality of protective sectors 2, each consisting of one panel of a rectangular form made of a padding material, i.e. for example foam rubber, foam polyethylene, foam polyurethane, of a thickness adapted for at least partly absorbing the impact energy of hailstones even of big sizes.

It is generally important that the use of material having a good capability of absorbing shocks, resisting atmospheric conditions and having a high chemical inertia should be provided. It is to note that the protective panels can be formed to advantage of two or more layers of different materials in order to achieve the desired shock-absorbing features.

The protective sectors 2 are connected with each other by flexible connection means 3 enabling covering 1 to be both unfolded to an operating condition, that is with the sectors disposed sequentially in side by side relation so that they can cover at least part of the upper surface of a vehicle, and to be folded up to a non-operating condition, that is for storage and transportation, in which the sectors are mutually superposed and form a body of a bulkiness corresponding, in plan view, to the sizes of a single sector.

The flexible connection means 3 is defined by a tarpaulin of a waterproof material of sizes corresponding to the overall surface intended for covering 1. Each panel 2 is connected to the tarpaulin 3 and suitably coated with a waterproof layer 4 on its side opposite to the surface matching the tarpaulin 3.

It is to note that both the tarpaulin 3 and layer 4, although made of a waterproof material , must ensure a good perspiration in order to avoid dangerous condensate phenomena.

It is also important to point out that the materials employed for the tarpaulin and layer manufacture must ensure a good weatherability, in particular they are to be subjected to a weal structural and aesthetical wear and tear resulting from heat and light radiation.

In addition, in particular if the covering is exposed to heat, particle-migration phenomena that may involve adhesions to the car body and conseguent damages thereto, are to be avoided. These phenomena are in particular connected with the tarpaulin 3 and layer 4 lightfastness.

In order to comply with all the above requirements, the use of preferably synthetic fibre material yarns of high thermal resistance (i.e. Kevlar, Ricem) has appeared as very convenient, which yarns are suitably sheathed by plastic materials such as nylon, Teflon, PVC, polyester resin or still others.

Preferably the side of the thetarpaulin 3 and layer 4 that is turned towards panels 2 is also coated with a layer of waterproofing material (resin finish).

In order to substantially inhibit passage of water through the tarpaulin, should the latter have seamed junctions, the use of waterproofing tapings covering the seams is provided.

From a construction point of view a structure in which the tarpaulin 3 is made of a polyester resin, preferably silver-plated on its outer surface, has proved to be advantageous. The tarpaulin 3 is also coated with waterproofing resin at its inner surface facing panels _{2.}

Layer 4, in turn, is made of a polyester resin, preferably uncoloured to avoid the above mentioned migration phenomena.

Layer 4 too, at its inner side facing panels 2, is preferably provided with a waterproofing resin coating.

As mentioned, as an alternative solution, the polyester resin can be replaced with a PVC sheet that, although relatively heavy, has the advantage of being easily heat sealed.

Advantageously, the tarpaulin 3 is divided at least partially into two longitudinal portions 3a and 3b so as to make two respective sequences of longitudinally-aligned sectors 2 correspond to said portions.

More precisely, said longitudinal sequences comprise, at a corresponding front end 3c of the tarpaulin 3, a pair of front end sectors 2a disposed in mutual side by side relationship and fastened to an upper face 3d of the tarpaulin 3, the longitudinal portions 3a and 3b of which are mutually joined only at said end sectors 2a.

Connected with each of the end sectors 2a is a succession of sectors fastened to a lower face 3e of the respective longitudinal portion 3a and 3b of the tarpaulin 3.

Practically, each sequence of sectors, since it is separated from the sequence disposed side by side, can be independently folded over the respective end sector 2a which forms the base on which the other sectors are placed in a stacked configuration. In the folded position, the two sector stacks are therefore joined at the lower part thereof by the tarpaulin 3 along a front longitudinal length 5 of the latter.

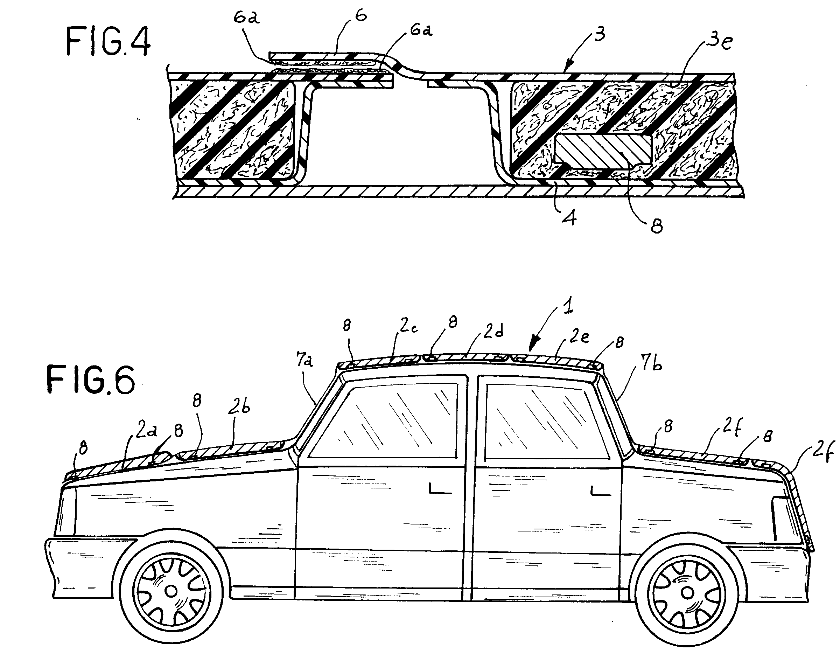

The longitudinal portions 3a and 3c of the tarpaulin 3 can be joined in a detachable manner, after being unfolded, by mutual-engagement means 6 (Fig. 4) defined by a longitudinal strip of fabric projecting from one of said longitudinal portions and fastened to the other portion by first pressure coupling bands 6a for example, of the type commercially known under the trade name "Velcro".

In order to reduce bulkiness of a covering in a non-operating folded condition, it is advantageously possible to contemplate the engagement of the tarpaulin 3 with padded protective sectors only at those areas that are provided for matching with metal portions of the upper surfaces of a vehicle and consequently let the other areas 7 free of said padded sectors, that is exclusively formed of the tarpaulin itself, for matching with the glazed surfaces of the vehicle that, as known, resist the hail impact without damages.

In addition, thanks to the particular sector-wise structure of the tarpaulin in question, the tarpaulin portions intended for corresponding with glazed surfaces may be made of an optically transparent material. This enables a good visibility to be obtained both towards and from the inside of a car, even when the covering element is disposed on the car itself.

Clearly, the use of a tarpaulin provided with transparent portions increases safety in using the same, above all under emergency conditions (sudden hail shower) in which the driver and passengers are obliged to stay inside the vehicle after the protective covering has been set in place. Still for the purpose of increasing safety in the tarpaulin use, said covering may be provided with position indicator means, such as stripes of fluorescent or reflecting material, applied to the tarpaulin, for example by gluing, painting or the like.

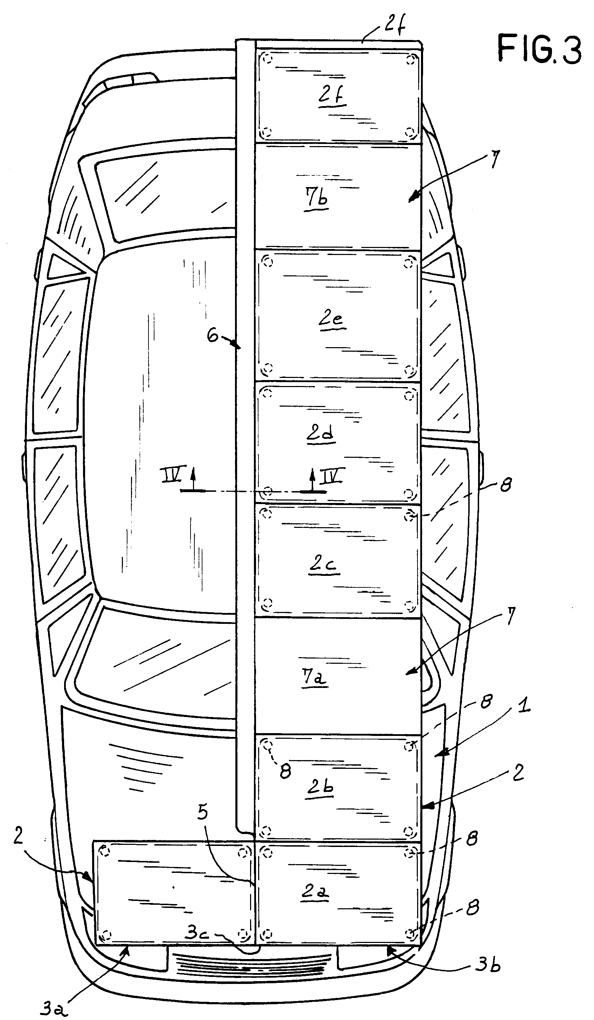

By way of example, as shown in Fig. 3, for each sector sequence, that is each longitudinal portion of the tarpaulin 3, in addition to the end sectors 2a provision may be made for one sector 2b protecting the bonnet, three sectors 2c, 2d and 2e for the engine roof, and at least one sector 2f for the boot. Free areas 7a and 7b are disposed between sectors 2b and 2c and between sectors 2e and 2f and correspond to the front windshield and rear window.

In an original manner, engagement of each sector or protective panel 2 with the vehicle body is carried out by fastening means 8 defined by permanent magnets fitted into the padding thickness of the panel itself.

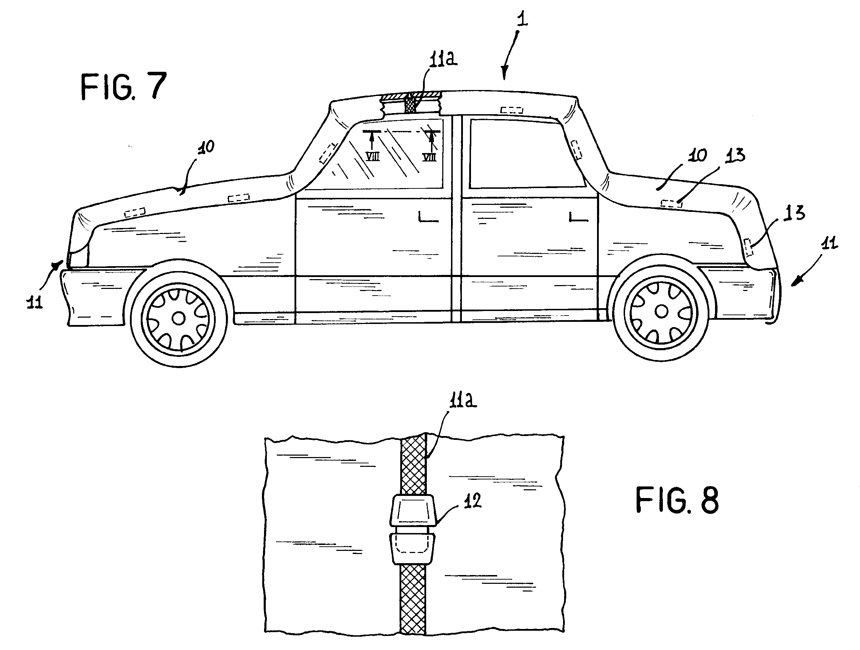

Obviously (see Fig. 7), when the protective covering is to be employed for vehicle bodies made of non-magnetic materials (composite materials, aluminium), the covering may be provided with straps 11 or similar means for fastening to the car.

In particular, provided at a central area of the covering are main straps 11a comprising a first and a second half such arranged as to pass through the inside of the car, through the spaces defined by the doors for example, and to ultimately engage with each other by means of an anchoring element 12. This element too preferably is formed of two halves to be snap-coupled and adapted to define abutment surfaces preventing the main strap halves from being unthreaded when the vehicle doors are closed.

In this manner, should an individual try to steal the covering 1, he/she will be obliged to cut the main straps at both their halves, thereby greatly damaging the covering itself.

Finally, if one wishes to complete covering of the vehicle at the side surfaces thereof, so as to make a protection aganst dust and usual atmospheric agents, the use of auxiliary sheets to be engaged sideways to the tarpaulin 3 may be provided. For the purpose, second pressure-coupling bands 6b may be disposed along the external sides of the protective covering 1 (Fig. 5).

As can be viewed from Fig. 7, provision may be also made for side valance-like protections denoted by 10 which are preferably disposed along a perimetric edge of the protective covering 1. The side valance-like protections 10 can, in turn, be provided with connecting elements 13, of the pressure type for example, such as "Velcro" strips or snap fasteners, for use of auxiliary sheets to be disposed sideways of the tarpaulin 3 in order to protect the car flanks.

The use of a protective covering for vehicles described above mainly as regards structure is as follows.

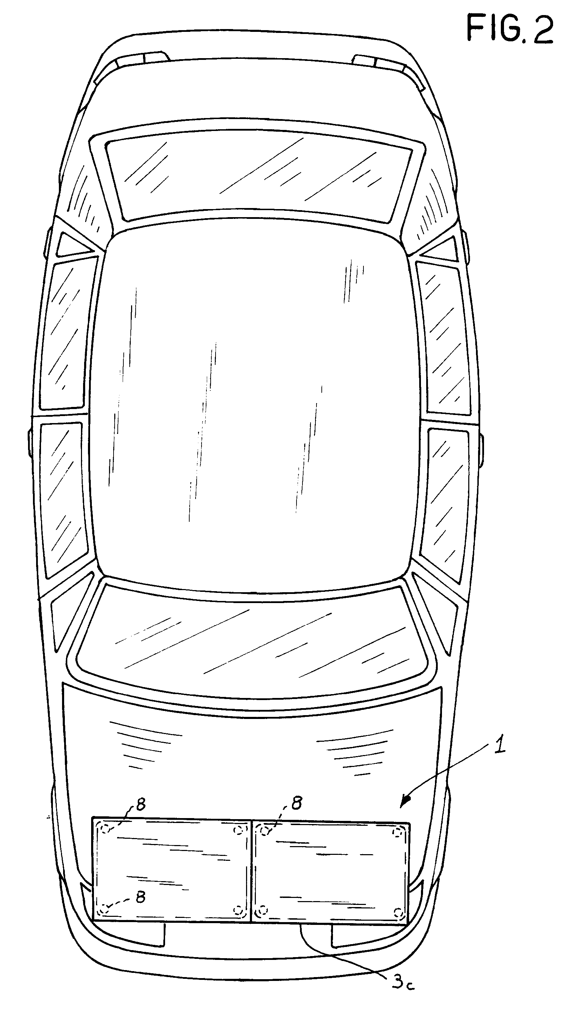

First of all, after the two sector stacks corresponding to the longitudinal portions 3a and 3b of the tarpaulin 3 are book-like opened, the front end sectors 2a are positioned onto the front bonnet of a vehicle, the permanent magnets 8 of said sectors enabling an immediate and strong engagement of same with the bonnet itself (see Fig. 2).

Subsequently, the longitudinal sequences of the protective sectors are unfolded one after the other, by suitably grasping the different superposed panels. This operation can be performed very quickly and, as soon as each sector matches with the respective portion of the vehicle body, the corresponding permanent magnets fix it to the operating position.

At the end of this step of unfolding the protective sectors, approching of the longitudinal tarpaulin portions can be completed by the use of the longitudinal strip 6 and said portions can be connected with each other (see Fig. 4) by the same strip 6.

Folding of covering 1 takes place in the same manner, by intervening in succession on each of the longitudinal sequences of sectors 2.

First of all , sector 2e is folded over sector 2d so that the free area 7b is dragged along upon sector 2e itself. Subsequently the free area 7b is folded over sector 2c: this operation brings sector 2f upon sector 2d and the latter upon sector 2e which, in turn is put on top of the free area 7b. Folding goes on by folding sector 2b over sector 2a and making the previously superposed sectors slide to the preceding position of sector 2b. Due to the presence of the free area 7a, said superposed sectors can be then put on top of sector 2b.

After two stacks of sectors disposed in side by side relationship (Fig. 2) have been thus constituted, folding is completed by placing one of these stacks on top of the other by the use of the front longitudinal length 5 of the tarpaulin 3 joining the stacks themselves at the lower part thereof. Practically, the lower faces of the end sectors 2a are brought to match with each other by folding said stacks book-like along the longitudinal length 5. Thus a single sector stack is obtained, which will greatly reduce the bulkiness of covering 1 when in the folded up position.

The invention achieves important advantages.

In fact, application to a vehicle of the covering in accordance with the invention is carried out in a very short period of time, not only because the two longitudinal portions forming it can be unfolded very quickly, as they are formed of superposed panels, but also due to the absence of any operating step for carrying out fastening of same, since the permanent magnets immediately engage the protective panels as they match with the vehicle body.

In addition, when unfolding of the covering is being carried out, there are no wide surfaces exposed to the wind action because the protective sectors can be applied individually in succession to the vehicle body and immediately brought into engagement therewith by the permanent magnets, while the other sectors still to be positioned are maintained superposed. Use of the covering according to the invention is therefore practical and does not require particular physical efforts.

Finally, the above described covering is safe and efficient even in case of violent hailstorms because the padded panels forming the protective sectors can resist very strong impacts as they are directly supported, over the whole surface thereol, by the underlying body of a vehicle.

The invention is susceptible of many modifications and variations, all of them falling within the scope of the inventive idea. For example, it may be possible for the longitudinal portions 3a, 3b forming the tarpaulin 3 to be folded in a detachable manner at the end sectors 2a too, by extending the mutual-engagement means 6 until close to the front edge of the tarpaulin itself. This enables the stacks formed of the folded up covering to be mutually separated in order to facilitate a possible storage of same into the car boot. In addition, all of the details can be replaced by technically equivalent elements.

Furthermore, it is possible to provide that the flexible connection means should consist of recessed portions of the covering 1. More particularly, covering 1 will be obtained starting from a single semifinished product on which, by one or more presses, protective sectors 2 and recessed portions forming a flexible connection between the different sectors are produced.

## Claims

1. A protective covering for vehicles, against hail or similar threats against the vehicle body, comprises:
- at least one series of protective sectors (2) adapted to absorb the impact energy of the hailstones at least partly;
- flexible connection means (3) for said sectors which are adapted, in an operating condition, to enable unfolding of said sectors at least over one portion of the upper surface of a vehicle and, in a non-operating condition, to enable folding up of the covering itself in such a manner as to cause mutual superposition of said sectors; and
- means (8) for fastening the covering to the vehicle body.

2. A covering according to claim 1, in which said flexible connection means (3) for said sectors (2) are made of at least one tarpaulin of a size corresponding at least to the overall surface of said sectors.

3. A covering according to the claim 2, in which said sectors (2) are defined by panels of padding material integral with said tarpaulin (3).

4. A covering according to the claim 3, in which said tarpaulin (3) comprises at least two longitudinal portions (3a, 3b) at least partly separated and adapted to align said sectors (2) in two corresponding longitudinal sequences.

5. A covering according to claim 4, in which said longitudinal sector sequences comprise, at a corresponding end (3c) of said longitudinal portions (3a, 3b), end sectors (2a) disposed in side by side relationship, and in which said longitudinal portions (3a, 3b) of said tarpaulin (3) are joined at said end sectors (2a), the panels defining said end sectors (2a) being fastend to an upper face of said tarpaulin (3) and the panels defining the sectors following said end sectors (2a) being fastened to a lower face of said tarpaulin.

6. A covering according to claim 5, in which said sectors (2) substantially have the form of rectangles.

7. A covering according to claim 4, in which provision is made for mutual-engagement means (6) for said longitudinal portions (3a, 3c) of the tarpaulin (3) which is adapted to join said portions together so as to form a single body.

8. A covering according to claim 2, in which said protective sectors (2) are positioned on said tarpaulin in such a manner that, in an operating condition, they substantially match the metal portions of the upper surface of a vehicle, and in which said tarpaulin is comprised of areas free of said protective sectors substantially intended for corresponding with the glazed surfaces of the vehicle.

9. A covering according to claim 1, in which said fastening means (8) are defined by permanent magnets engaged in each of said protective sectors.

10. A covering according to claim 2, in which auxiliary sheets are provided for connection with said tarpaulin (3) and adapted to complete the vehicle protection at the side surfaces of same.

## Patentansprüche

1. Abdeckhülle für Fahrzeug, insbesondere für den Schutz gegen Hagel oder ähnliche Gefahren für Fahrzeugkarosserien, umfassend:
- mindestens eine Reihe von Schutzsektoren (2), die mindestens teilweise die Aufprallenergie der Hagelkörner auffangen;
- biegsame Verbindungsglieder (3) der Schutzsektoren, die in wirksamer Stellung, die Entfaltung der Schutzsektoren mindestens im Bereich eines Teils der oberen Fläche eines Fahrzeuges erlauben und insbesondere das Zusammenfalten der Abdeckhülle selbst derart in der nicht wirksamen Stellung ermöglichen, daß die Schutzsektoren zueinander über einander gelegt werden; und
- Befestigungsmittel (8) der Abdeckhülle an der Karosserie.

2. Abdeckhülle nach Anspruch 1, bei der die biegsamen Verbindungsglieder (3) der Schutzsektoren (2) aus mindestens einer Plane mit Abmessungen bestehen, die mindestens der Gesamtfläche der Schutzsektoren entsprechen.

3. Abdeckhülle nach Anspruch 2, bei der die Schutzsektoren (2) durch an der Plane (3) festliegende Platten aus Füllmaterial festgelegt sind.

4. Abdeckhülle nach Anspruch 3, bei der die Plane (3) mindestens zwei Längsabschnitte (3a, 3b) umfaßt, die mindestens teilweise getrennt sind und die Schutzsektoren (2) gemäß zwei entsprechenden Reihenfolgen in Längsrichtung ausrichten.

5. Abdeckhülle nach Anspruch 4, bei der die Reihenfolgen der Schutzsektoren in Längsrichtung an einem jeweiligen Ende (3c) der Längsabschnitte (3a, 3b) an einander gereihte Endsektoren (2a) umfassen und bei der die Längsabschnitte (3a, 3b) der Plane (3) im Bereich der Endsektoren (2a) vereint sind, wobei die, die Endsektoren (2a) festlegenden Platten an einer oberen Flanke der Plane (3) und die, die den Endsektoren (2a) folgenden Schutzsektoren festlegenden Platten an einer unteren Flanke der Plane befestigt sind.

6. Abdeckhülle nach Anspruch 5, bei der die Schutzsektoren (2) im wesentlichen rechteckig ausgebildet sind.

7. Abdeckhülle nach Anspruch 4, bei der gegenseitige Eingriffsmittel der Längsabschnitte (3a, 3c) der Plane (3) vorgesehen sind. welche die Längsabschnitte zur Bildung eines einstückigen Körpers verbinden.

8. Abdeckhülle nach Anspruch 2, bei der die Schutzsektoren (2) an der Plane derart positioniert sind, daß sie in der wirksamen Stellung im wesentlichen Metallteilen der oberen Fläche eines Fahrzeuges entsprechen, und bei der die Plane im wesentlichen im Bereich der verglasten Fläche des Fahrzeuges von den Schutzsektoren freie Stellen umfaßt.

9. Abdeckhülle nach Anspruch 1, bei der die Befestigungsmittel (8) durch Dauermagneten festgelegt sind, die jeweils an den Schutzsektoren in Eingriff stehen.

10. Abdeckhülle nach Anspruch 2, bei der Hilfsbahnen für die Verbindung mit der Plane (3) vorgesehen sind, welche den Schutz des Fahrzeuges im Bereich der Seitenflächen desselben vervollständigen.

## Revendications

1. Housse pour véhicule, en particulier pour protection contre les chutes de grêle ou menaces similaires intéressant la carrosserie d'un véhicule, comprenant:
- au moins une série de secteurs de protection (2) destinés à absorber au moins partiellement l'énergie de choc des grêlons;
- des moyens de liaison flexibles (3) desdits secteurs qui sont destinés à permettre, en condition de fonctionnement, le déploiement desdits secteurs au moins sur une portion de la surface supérieure du véhicule et, en condition de non fonctionnement, le pliage de ladite housse de manière à causer la superposition réciproque desdits secteurs; et
- des moyens (8) pour fixer la housse à la carrosserie du véhicule.

2. Housse selon la revendication 1, dans laquelle lesdits moyens de liaison flexibles (3) pour lesdits secteurs (2) se composent d'au moins une bâche de dimensions correspondant au moins à la surface totale desdits secteurs.

3. Housse selon la revendication 2, dans laquelle lesdits secteurs (2) sont définis par des panneaux en matériau de rembourrage solidaires de ladite bâche (3).

4. Housse selon la revendication 3, dans laquelle ladite bâche (3) comporte au moins deux portions longitudinales (3a, 3b) au moins partiellement séparées et aptes à aligner lesdits secteurs (2) selon deux séquences longitudinales correspondantes.

5. Housse selon la revendication 4, dans laquelle lesdites séquences longitudinales des secteurs comportent, à une extrémité correspondante (3c) desdites portions longitudinales (3a, 3b), des secteurs terminaux (2a) disposés côte à côte, et dans laquelle lesdites portions longitudinales (3a, 3b) de ladite bâche (3) sont unies en correspondance desdits secteurs terminaux (2a), les panneaux définissant lesdits secteurs terminaux (2a) étant fixés à une face supérieure de ladite bâche (3) et les panneaux définissant les secteurs venant après lesdits secteurs terminaux (2a) étant fixés à une face inférieure de ladite bâche.

6. Housse selon la revendication 5, dans laquelle lesdits secteurs (2) ont sensiblement la forme de rectangles.

7. Housse selon la revendication 4, dans laquelle on prévoit des moyens d'engagement réciproque (6) desdites portions longitudinales (3a, 3c) de la bâche (3) qui sont destinés à joindre lesdites portions de manière à former un seul corps.

8. Housse selon la revendication 2, dans laquelle lesdits secteurs de protection (2) sont positionnés sur ladite bâche de telle sorte qu'en condition de fonctionnement ils épousent essentiellement les portions métalliques de la surface supérieure d'un véhicule, et dans laquelle ladite bâche comprend des zones libres desdits secteurs de protection destinées essentiellement à correspondre aux surfaces vitrées du véhicule.

9. Housse selon la revendication 1, dans laquelle lesdits moyens de fixation (8) sont définis par des aimants permanents engagés dans chacun desdits secteurs de protection.

10. Housse selon la revendication 2, dans laquelle on prévoit des toiles auxiliaires à unir à ladite bâche (3) lesquelles sont destinées à compléter la protection du véhicule en correspondance des surfaces latérales de ce dernier.
